# FASCICULE DE BREVET EUROPEEN

(11) **EP 4 315 369 B1**
(45) Date de publication et mention de la délivrance du brevet: **12.02.2025**
(21) Numéro de dépôt: 22714491.2
(22) Date de dépôt: 17.03.2022
(51) Int. Cl.: G21F 5/002, G21F 5/08

(54) **ENSEMBLE POUR LE TRANSPORT D'HEXAFLUORURE D'URANIUM, COMPRENANT DES CAPOTS AMORTISSEURS DE CHOC**
VORRICHTUNG ZUM TRANSPORT VON URANHEXAFLUORID MIT STOSSDÄMPFERN
DEVICE FOR THE TRANSPORT OF URANIUM HEXAFLUORIDE COMPRISING SHOCK ABSORBERS

(30) Priorité: 24.03.2021 FR 2102945
(43) Date de publication de la demande: 07.02.2024
(73) Titulaire: ORANO NUCLEAR PACKAGES AND SERVICES, 78180 Montigny-le-Bretonneux (FR)
(72) Inventeur: VUILLERMOZ, Didier, 91220 BRETIGNY-SUR-ORGE (FR); BIGUET, Alexandre, 93360 NEUILLY-PLAISANCE (FR); BRUT, Stéphane, 78390 BOIS D'ARCY (FR); HAMY, Charles-Edouard, 92400 COURBEVOIE (FR); TARDY, Marcel, 92320 CHATILLON (FR)
(74) Mandataire: Brevalex
(86) Numéro de dépôt international: PCT/FR2022/050491
(87) Numéro de publication internationale: WO 2022/200719

(56) Documents cités:
- WO-A1-2010/043534
- WO-A1-2017/194612
- US-A- 3 484 391

## Description

### DOMAINE TECHNIQUE

La présente invention se rapporte au domaine du transport d'hexafluorure d'uranium, en particulier destiné à être réalisé entre une installation d'enrichissement et des sites de fabrication d'éléments combustibles nucléaires.

### ÉTAT DE LA TECHNIQUE ANTÉRIEURE

L'enrichissement de l'uranium à partir d'une teneur en U²³⁵ d'environ 0,71%, jusqu'à environ 5,0% et au-delà, est effectué dans des installations d'enrichissement sous la forme chimique d'hexafluorure d'uranium (UF6). L'UF6 enrichi est ensuite utilisé pour la fabrication d'éléments combustibles nucléaires.

Le transport de l'uranium enrichi entre l'installation d'enrichissement et les sites de fabrication d'éléments combustibles se fait donc sous la forme chimique d'UF6. Dans une telle installation d'enrichissement, l'uranium est ainsi conditionné sous la forme d'hexafluorure d'uranium enrichi dans des cylindres étanches, également dénommés conteneurs internes étanches.

Outre les dangers résultant de sa radioactivité, voire de son caractère fissile, l'hexafluorure d'uranium présente également un fort risque chimique. La réglementation prévoit donc des prescriptions particulières pour le transport d'hexafluorure d'uranium enrichi.

A titre d'exemple indicatif, les conteneurs internes étanches doivent satisfaire les exigences spécifiques de la norme ISO 7195 qui régit la conception, la fabrication et l'utilisation de ces conteneurs internes étanches.

La quasi-totalité des conteneurs internes étanches utilisés actuellement pour le transport d'hexafluorure d'uranium enrichi répondent à la dénomination normalisée de « cylindre 30B ». Un tel cylindre e.g. est utilisé dans le document WO 2017/194612.

Cependant, pour les enrichissements supérieurs à 5%, la maîtrise de la sous-criticité peut s'avérer techniquement difficile avec les conteneurs internes conventionnels du type « cylindre 30B » ou équivalents.

Pour répondre à cette problématique, une première famille de solutions consiste à accepter l'introduction d'eau dans le conteneur interne étanche, ce qui impose néanmoins la mise en place d'éléments de poison neutronique à l'intérieur de ce conteneur. La capacité de chargement d'hexafluorure d'uranium se trouve bien évidemment altérée par la présence des éléments de poison neutronique au sein de la cavité définie par le conteneur interne. De plus, ces éléments de poison neutronique introduisent des risques de mauvais remplissage de l'hexafluorure d'uranium dans la cavité, du fait de l'éventuelle cristallisation de l'UF6 autour des éléments de poison neutronique, tels que des barreaux borés. Enfin, cette solution entraîne des coûts de maintenance élevés, notamment en raison du besoin de vérification de l'épaisseur des éléments de poison neutronique, sensibles à la corrosion.

Une seconde famille de solutions consiste à exclure l'introduction d'eau dans le conteneur interne étanche, mais il nécessite dans ce cas une double paroi pour satisfaire le critère de sous-criticité. Ce type de conception implique de former une double barrière étanche à l'eau, comme par exemple celle divulguée dans le document US2014/0027315. Or ces solutions conduisent également à réduire le volume de stockage d'UF6 dans la cavité du conteneur interne, ce qui n'est pas souhaitable. Leurs conceptions s'éloignent par ailleurs de celles des conteneurs internes conventionnels / normalisés du type « cylindre 30B » ou équivalents. En outre, l'espace annulaire prévu entre les deux parois d'un tel conteneur génère une inertie thermique néfaste, puisqu'elle provoque des contraintes fortes durant certaines phases d'exploitation nécessitant un chauffage du conteneur, par exemple lors du remplissage d'hexafluorure d'uranium dans la cavité du conteneur. Cette inertie thermique nécessite une durée de chauffage plus élevée et/ou une puissance de chauffage accrue, s'accompagnant nécessairement d'un impact négatif en termes de coûts.

Il existe par conséquent un besoin d'optimisation de la conception des ensembles existants pour le transport d'hexafluorure d'uranium, notamment lorsque celui-ci est enrichi à une valeur supérieure à 5%, du fait des risques de sur-criticité qui en découlent.

### EXPOSÉ DE L'INVENTION

L'invention a donc pour but de répondre au besoin identifié ci-dessus. Pour ce faire, l'invention a tout d'abord pour objet un ensemble pour le transport d'hexafluorure d'uranium, comprenant :
- un conteneur interne étanche, définissant une première enceinte de confinement destinée à être chargée d'hexafluorure d'uranium, le conteneur interne étanche présentant une forme générale cylindrique de section circulaire, la première enceinte de confinement étant délimitée par une paroi latérale s'étendant autour d'un axe central longitudinal du conteneur interne, ainsi que par deux parois d'extrémité axiale opposées traversées par l'axe central longitudinal, au moins l'une des deux parois d'extrémité axiale opposées du conteneur interne étanche étant équipée d'une vanne de remplissage d'hexafluorure d'uranium ainsi que d'un prolongement axial annulaire de protection de la vanne de remplissage d'hexafluorure d'uranium, le prolongement s'étendant axialement au-delà de la vanne de remplissage ;
- un conteneur externe étanche délimitant une seconde enceinte de confinement dans laquelle est logé, de manière extractible, le conteneur interne étanche ; et
- deux capots amortisseurs de choc fixés de manière démontable sur respectivement deux extrémités axiales opposées du conteneur externe étanche.

La nouvelle conception proposée permet de répondre au critère de sous-criticité même pour le transport d'hexafluorure d'uranium fortement enrichi (enrichissement supérieur à 5% en masse), grâce en particulier à la double enceinte de confinement qu'elle propose. En outre, cette conception permet avantageusement d'utiliser des conteneurs internes conventionnels / normalisés existants du type « cylindre 30B » ou équivalents (en conservant notamment leurs capacités de chargement en hexafluorure d'uranium), tout en offrant des facilités de chauffage du conteneur interne étanche. En effet, en exploitation et plus particulièrement pour les besoins des opérations de remplissage d'hexafluorure d'uranium, le conteneur interne peut être aisément extrait du conteneur externe étanche, pour pouvoir être ensuite plus facilement chauffé sans être contraint par les problèmes d'inertie thermique rencontrés dans l'art antérieur.

Enfin, la présence de capots amortisseurs aux extrémités axiales du conteneur externe permet de renforcer la résistance mécanique de l'ensemble, notamment pour satisfaire le critère mécanique en cas de chute, et ce sans pénaliser trop fortement la masse globale de l'ensemble.

L'invention présente de préférence au moins l'une des caractéristiques optionnelles suivantes, prises isolément ou en combinaison.

De préférence, le conteneur externe étanche comporte un étui ainsi qu'un couvercle fixé de manière démontable sur l'étui, ce dernier délimitant une ouverture d'introduction axiale du conteneur interne étanche dans la seconde enceinte de confinement.

De préférence, le conteneur interne est agencé dans le conteneur externe de sorte que la vanne de remplissage du conteneur interne fait face au couvercle du conteneur externe. De préférence, une couche de matériau isolant neutronique, de préférence réalisée dans un matériau comprenant du bore et/ou hydrogéné, est prévue :
- sur une surface latérale externe du conteneur externe étanche ; et/ou
- sur une surface latérale interne du conteneur externe étanche ; et/ou
- lorsque le conteneur externe étanche présente une double paroi latérale, entre les deux parois de la double paroi latérale.

La ou les couches de matériau isolant neutronique permettent d'atteindre le facteur de multiplication effectif « Keff » souhaité, et donc de plus facilement répondre au critère de sous-criticité.

De préférence, la paroi latérale du conteneur externe étanche est en acier. Ce matériau est aussi préférentiellement utilisé pour le conteneur interne étanche.

De préférence, les parois latérales du conteneur externe étanche et du conteneur interne étanche sont en acier et présentent une épaisseur cumulée supérieure ou égale à 13 mm. Cette épaisseur cumulée permet non seulement de satisfaire le critère de résistance mécanique de l'ensemble, mais, de façon surprenante, elle contribue également à satisfaire le critère de sous-criticité pour l'application souhaitée. En effet, il a été observé que l'acier participe à la sous-criticité de l'ensemble, alors qu'habituellement, il demeure transparent ou quasi-transparent vis-à-vis des neutrons. Cet avantage inattendu semble résulter du spectre énergétique dégagé par l'hexafluorure d'uranium, visiblement différent de celui dégagé par d'autres sources, comme le combustible nucléaire irradié. Ainsi, du fait de ce spectre énergétique particulier dans l'application souhaitée, l'acier va réagir différemment avec les neutrons émis par l'hexafluorure d'uranium. Ces parois en acier vont ainsi avantageusement contribuer à satisfaire le critère de sous-criticité, de préférence en association avec une ou plusieurs couches de matériau isolant neutronique, comme mentionné précédemment.

De préférence, l'un des deux capots amortisseurs de choc comporte un élément amortisseur de choc en regard axialement de la vanne de remplissage d'hexafluorure d'uranium prévue sur le conteneur interne étanche. Cet élément amortisseur permet ainsi de protéger convenablement la vanne de remplissage, correspondant généralement au point le plus vulnérable du conteneur interne étanche en cas de chute.

De préférence, chaque capot amortisseur de choc comporte un renfoncement dans lequel est logée l'extrémité axiale associée du conteneur externe étanche.

De préférence, l'ensemble présente une longueur inférieure ou égale à la longueur d'un conteneur ISO de 20 pieds selon la direction de l'axe central longitudinal du conteneur interne étanche, et de préférence une longueur inférieure ou égale à la longueur d'un conteneur ISO de 15 pieds.

De préférence, le conteneur interne étanche est conçu pour répondre à la norme ISO 7195 portant sur le transport d'hexafluorure d'uranium, selon l'une quelconque des deux éditions parues en 2005 et 2020. Cette norme, s'inscrivant dans le domaine de l'énergie nucléaire, présente des conteneurs dits cylindres, portant notamment les références 5B, 8A, 12B, 30B ou 30C (ce dernier cylindre n'étant concerné que par l'édition 2020 de la norme ISO 7195). L'invention est ainsi préférentiellement mise en œuvre avec ces cylindres 5B, 8A, 12B, 30B, 30C.

L'invention a également pour objet un système comprenant un véhicule de transport d'hexafluorure d'uranium, ainsi qu'au moins un ensemble tel que décrit ci-dessus, monté sur une plateforme de chargement de ce véhicule, qui est préférentiellement un véhicule de transport routier, ferroviaire ou maritime. A cet égard, il est noté que chaque ensemble peut être monté directement sur la plateforme du véhicule, ou indirectement par l'intermédiaire d'un conteneur à plateau, lui-même destiné à être monté de manière amovible sur la plateforme du véhicule.

De préférence, chaque ensemble est orienté de sorte que l'axe central longitudinal de son conteneur interne étanche soit agencé parallèlement à une direction d'avancement du véhicule de transport. Cela rompt ainsi avec les solutions existantes, dans lesquelles l'axe du conteneur interne étanche est habituellement agencé orthogonalement à la direction d'avancement du véhicule.

De préférence, plusieurs ensembles sont montés sur la plateforme de chargement du véhicule, en étant empilés les uns sur les autres, et/ou agencés les uns derrière les autres selon la direction d'avancement du véhicule de transport, et/ou agencés les uns à côté des autres.

Par exemple, plusieurs ensembles sont montés sur un conteneur plateau, couramment appelé « flatrack » (en anglais), lui-même monté sur la plateforme du véhicule.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
[Fig. 1] représente une vue en perspective d'un système selon l'invention, comprenant un véhicule de transport d'hexafluorure d'uranium, ainsi que deux ensembles pour le transport d'hexafluorure d'uranium montés sur la plateforme de chargement du véhicule, l'un des deux ensembles étant représenté partiellement coupé pour davantage de clarté sur cette figure ;
[Fig. 2] est une vue en perspective éclatée de l'un des deux ensembles de transport montrés sur la figure 1, selon un mode de réalisation préféré de l'invention ;
[Fig. 3] est une vue en coupe transversale de l'ensemble de transport, prise selon le plan P1 de la figure 2 ;
[Fig. 4] est une vue de côté du conteneur interne étanche logé à l'intérieur de l'ensemble montré sur les figures 2 et 3 ;
[Fig. 5] est une vue de face du conteneur interne montré sur la figure précédente, selon la direction axiale du conteneur interne, montrant la paroi d'extrémité axiale équipée d'une vanne de remplissage d'hexafluorure d'uranium ;
[Fig. 6] est une vue partielle agrandie de celle de la figure 4, montrant plus spécifiquement la vanne de remplissage du conteneur interne ;
[Fig. 7] est une vue en coupe axiale de l'ensemble de transport, prise selon le plan P2 de la figure 2 ; et
[Fig. 8] est une vue partielle et agrandie en coupe axiale de l'ensemble de transport, se présentant selon une alternative du mode de réalisation préféré montré sur les figures précédentes.

### EXPOSÉ DÉTAILLÉ DE MODES DE RÉALISATION PARTICULIERS

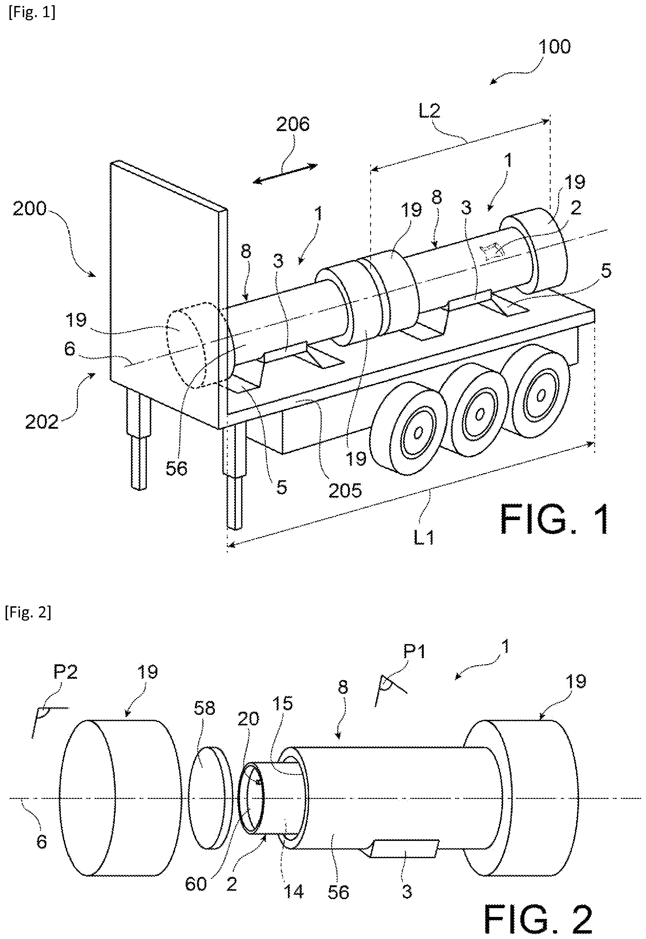

En référence tout d'abord à la figure 1, il est représenté un système 100 comprenant un véhicule de transport d'hexafluorure d'uranium, ce véhicule étant ici un véhicule de transport routier dont seule la partie remorque 202 a été représentée. Alternativement, il pourrait s'agir d'un véhicule de transport ferroviaire ou maritime, sans sortir du cadre de l'invention.

Le système 100 est complété par un ou plusieurs ensembles 1 spécifiques à la présente invention, montés de manière amovible sur la plateforme 205 de la remorque 202. Plus précisément, chaque ensemble 1 présente un corps latéral cylindrique solidaire d'un berceau 3, lui-même monté amovible sur un châssis 5 fixé sur la plateforme 205. Cette fixation du châssis 5 sur la plateforme 205 est également préférentiellement démontable. Selon une alternative non représentée, il peut être mis en œuvre un conteneur à plateau, également dénommé « flatrack » ou encore « conteneur maritime ». Dans ce cas de figure, le conteneur à plateau présente un plateau sur lequel sont montés les châssis 5 supportant les ensembles 1, avec ce plateau lui-même monté de manière amovible sur la plateforme 205 de la remorque 202.

Chaque ensemble 1 intègre un unique conteneur interne étanche 2, dont l'un est visible que très partiellement sur la figure 1. Ce conteneur interne étanche 2 est destiné à être chargé d'hexafluorure d'uranium, de préférence enrichi à une valeur supérieure à 5% en masse. Ici, ce sont deux ensembles de transport 1 qui sont agencés l'un derrière l'autre selon la direction d'avancement 206 du véhicule, en étant chacun fixé et en appui sur la plateforme 205. Alternativement ou simultanément, ces ensembles de transport 1 peuvent être empilés les uns sur les autres, ou encore, toujours alternativement ou simultanément, agencés les uns à côté des autres sur cette même plateforme.

Le nombre d'ensembles de transport 1 susceptibles d'être chargés sur la plateforme dépend notamment de la longueur de celle-ci, ainsi que de la longueur des ensembles 1. Selon la direction d'avancement 206 du véhicule 200, la plateforme 205 présente une longueur L1 égale ou sensiblement égale à la longueur d'une plateforme ISO de 40 pieds. Cela permet de mettre en œuvre l'invention avec des moyens standards, facilement disponibles sur le marché.

Par ailleurs, chaque ensemble de transport 1 est orienté sur la plateforme 205 de manière à ce que sa plus grande longueur L2 soit dans le sens de la direction d'avancement 206. Cette longueur L2 est préférentiellement inférieure ou égale à la longueur intérieure d'un conteneur à plateau ISO de 20 pieds (soit une longueur d'environ 5,7 mètres), et encore plus préférentiellement inférieure ou égale à la longueur intérieure d'un conteneur à plateau ISO de 15 pieds (soit une longueur d'environ 4,6 mètres). De cette manière, la plateforme 205 peut aisément transporter deux ensembles 1 l'un derrière l'autre, ou bien deux empilements d'ensembles 1 agencés l'un derrière l'autre.

Les ensembles de transport 1, qui seront détaillés ci-après, sont également agencés de telle sorte que l'axe central longitudinal 6 du conteneur interne étanche 2, soit orienté parallèlement à la direction d'avancement 206.

Par la suite, il va être décrit l'un des ensembles 1 de transport d'hexafluorure d'uranium enrichi à une valeur supérieure à 5%, selon un mode de réalisation préféré de l'invention. A cet égard, il est indiqué que tous les ensembles 1 destinés à être montés sur la plateforme 205 présentent une conception identique ou similaire à celle détaillée ci-après.

En référence aux figures 1 à 7, l'ensemble 1 comporte un conteneur externe étanche 8, formant l'enveloppe extérieure de l'ensemble, et délimitant une cavité 15. L'ensemble 1 comporte également un unique conteneur interne étanche 2, délimitant intérieurement un espace 14 de chargement d'hexafluorure d'uranium, cet espace 14 formant une première enceinte de confinement. De plus, la cavité 15 délimitée intérieurement par le conteneur externe 8 forme une seconde enceinte de confinement 15, dans laquelle est logé, de manière extractible, l'unique conteneur interne étanche 2.

Egalement, deux capots amortisseurs de chocs 19 sont montés de manière démontable, respectivement sur les deux extrémités axiales opposées du conteneur externe étanche 8.

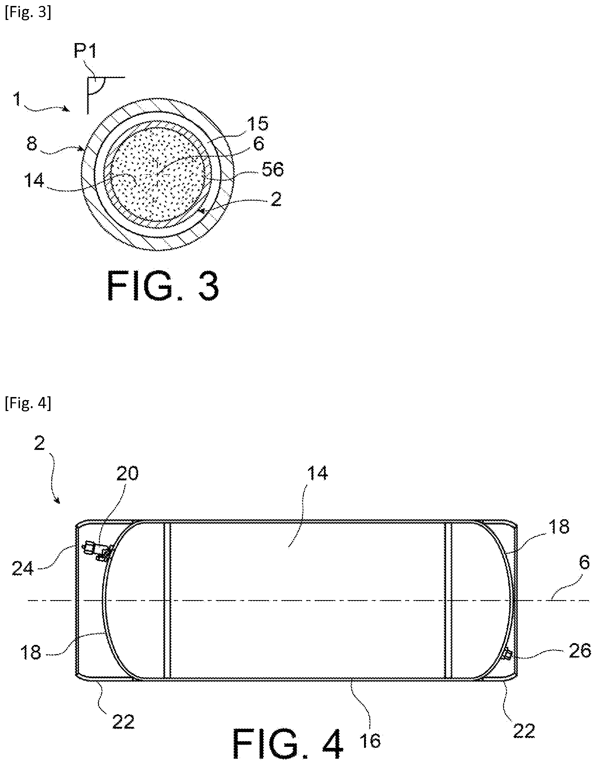

Le conteneur interne étanche 2 présente une forme générale cylindrique de section circulaire, centrée sur l'axe central longitudinal 6 du conteneur interne 2 concerné. Le conteneur interne 2 est disposé de manière à ce que son axe 6 soit parallèle à la plateforme sur laquelle l'ensemble 1 est destiné à être monté pour son transport. Plus précisément en référence aux figures 4 à 6, le conteneur interne étanche 2, destiné au chargement d'hexafluorure d'uranium enrichi, correspond préférentiellement à un conteneur normalisé connu sous l'appellation « cylindre 30B ». Alternativement, il pourrait s'agir de l'un quelconque des cylindres 5B, 8A, 12B, 30C, répondant à la même norme ISO 7195.

Il comporte l'espace de chargement 14 formant la première enceinte de confinement, délimitée par une paroi latérale cylindrique 16 de section circulaire, s'étendant autour de l'axe 6. Cette paroi latérale 16 est complétée par deux parois opposées d'extrémité axiale 18, chacune de forme bombée vers l'extérieur et traversée en son centre par l'axe central longitudinal 6.

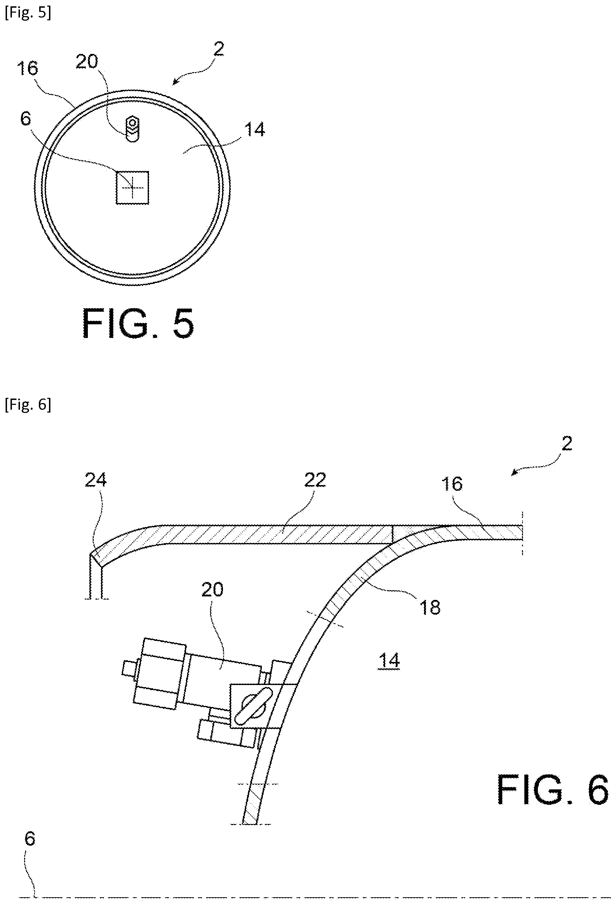

L'une des deux parois d'extrémité axiale 18 est équipée d'une vanne 20 de remplissage d'hexafluorure d'uranium, le mieux visible sur la figure 6. Cette vanne 20 s'étend en saillie axialement à partir de la paroi d'extrémité axiale 18, à l'extérieur de l'enceinte de confinement 14. Elle est protégée par un prolongement axial annulaire 22 de protection, s'étendant axialement au-delà de la vanne de remplissage 20. Ce prolongement 22 présente une forme cylindrique de section identique ou similaire à celle de la paroi latérale 16 à proximité de sa jonction avec celle-ci, puis se termine par une extrémité 24 légèrement recourbée vers l'intérieur, en direction de l'axe 6. Un prolongement 22 identique ou similaire peut être prévu sur l'autre paroi d'extrémité axiale 18, par exemple pour protéger un bouchon de vidange 26.

Le conteneur externe étanche 8 prend ici la forme d'un « canister », c'est-à-dire d'un étui cylindrique 56 fermé par un couvercle 58 fixé de manière réversible à une extrémité axiale de cet étui. Au niveau de cette extrémité axiale de l'étui 56, c'est-à-dire celle opposée au fond de ce même étui, ce dernier délimite une ouverture 60 d'introduction axiale du conteneur interne étanche 2, dans la seconde enceinte de confinement 15 délimitée par l'étui centré sur l'axe 6, et le couvercle 58 traversé orthogonalement par ce même axe.

Ici, un dispositif d'étanchéité (non représenté) est agencé au niveau de l'interface entre l'étui 56 et le couvercle 58, de manière à obtenir la seconde enceinte de confinement 15. Ce dispositif d'étanchéité peut être conventionnel, par exemple du même type que celui habituellement rencontré sur un couvercle d'un emballage classique de transport et/ou d'entreposage de matières radioactives. A titre d'exemple, il est prévu au moins un joint d'étanchéité, par exemple torique concentrique, disposé sur le couvercle, entre ce couvercle et l'extrémité du corps latéral de l'étui 56. Des vis permettant de fixer le couvercle sur le corps latéral de l'étui assurent la compression du joint entre le couvercle et le corps latéral.

L'ouverture 60 s'inscrit dans un plan orthogonal ou sensiblement orthogonal à l'axe 6 du conteneur interne unique 2 reçu dans l'étui 56. Avec une telle ouverture axiale 60, le conteneur interne 2 est destiné à être introduit dans l'étui 56 en étant déplacé dans une direction de déplacement parallèle à son axe 6.

L'intérieur de la seconde enceinte de confinement 15 et la surface extérieure du conteneur interne 2 présentent une complémentarité de forme, avec par exemple un jeu radial faible prévu entre les deux, en rapport à l'axe 6.

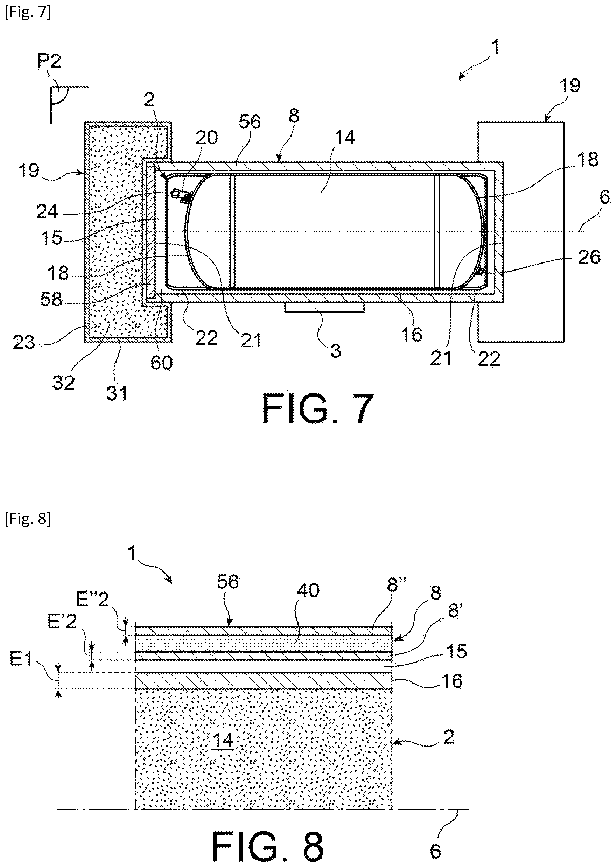

La paroi latérale et le fond de l'étui 56, ainsi que le couvercle 58, sont préférentiellement réalisés en acier, tout comme la paroi latérale 16 et les parois d'extrémité axiale 18 du conteneur interne 2. En outre, l'épaisseur cumulée des deux parois latérales en acier des deux conteneurs 2, 8 est préférentiellement supérieure ou égale à 13 mm. Cela permet non seulement de conférer une résistance mécanique satisfaisante à l'ensemble 1, mais cette épaisseur d'acier permet également, de manière surprenante, de satisfaire le critère de sous-criticité pour l'application souhaitée, à savoir le transport d'UF6 enrichi. Le critère de sous-criticité est également rempli grâce à la présence préférentielle d'une ou plusieurs couches de matériau isolant neutronique, réalisées par exemple dans un matériau comprenant du bore et/ou hydrogéné. A titre indicatif, il est noté que ce matériau isolant neutronique peut être un matériau très hydrogéné et sans bore, comme le silicone. Alternativement, ce matériau peut comporter du bore et pas d'hydrogène, comme un alliage d'aluminium au bore du type Al-B4C. Il peut également comporter de l'hydrogène et du bore, comme un polyéthylène haute densité (PEHD) boré. Une telle couche peut par exemple être prévue sur une surface latérale externe du conteneur externe étanche 8, et/ou sur une surface latérale interne de ce dernier. Dans l'alternative de réalisation montrée sur la figure 8, l'étui 56 du conteneur externe étanche 8 présente une double paroi latérale, formée par deux parois latérales 8', 8", de préférence concentriques et définissant entre elles un espace annulaire au moins partiellement comblé par une telle couche de matériau isolant neutronique 40. Dans cette alternative, la paroi latérale 16 en acier du conteneur interne 2 présente une épaisseur E1, la paroi latérale 8' du conteneur externe 8 présente une épaisseur E'2, tandis que sa paroi latérale 8" présente une épaisseur E"2. Dans ce contexte, c'est le cumul des épaisseurs E1, E'2, E"2 qui aboutit à une valeur supérieure ou égale à 13 cm, de manière à conférer des propriétés satisfaisantes pour l'ensemble 1, en matière de résistance mécanique et de sous-criticité.

Quel que soit le mode de réalisation envisagé, chacune des couches de matériau isolant neutronique énumérées ci-dessus peut être prévue seule sur l'ensemble 1, ou en combinaison avec une ou plusieurs autres de ces couches.

En référence plus spécifiquement à la figure 7, il est noté que le conteneur interne 2 est agencé dans l'enceinte de confinement 15 du conteneur externe 8, de sorte que la vanne de remplissage 20 soit axialement en regard du couvercle 58 du conteneur externe 8. De plus, ce couvercle 58 est protégé par la présence du capot amortisseur 19 monté sur l'extrémité axiale correspondante du conteneur externe 8. Pour ce faire, le capot 19 présente un renfoncement 21 dans lequel sont logés le couvercle 58, ainsi que l'extrémité axiale de l'étui 56 portant ce couvercle.

Le renfoncement axial 21, améliorant la tenue mécanique du capot 19 sur le conteneur externe 8, est défini par une paroi externe métallique 23 du capot, de préférence en acier. Cette paroi externe 23 renferme un ou plusieurs éléments amortisseurs de choc 25, dont l'un ou plusieurs sont agencés en regard axialement de la vanne 20 de remplissage d'hexafluorure d'uranium prévue sur le conteneur interne étanche 2. Cet élément amortisseur 25 permet ainsi de protéger convenablement la vanne 20, correspondant à une zone particulièrement sensible du conteneur interne étanche 2 en cas de chute. Un agencement identique ou similaire est prévu à l'extrémité axiale opposée du conteneur externe 8, avec l'autre capot 19 pour protéger le bouchon de vidange 26 du conteneur interne 2.

Avec cet ensemble 1 sous forme de deux enveloppes imbriquées l'une dans l'autre et complétées par les capots amortisseurs 19, et dont les deux enveloppes intérieures 2, 8 définissent une double enceinte de confinement, l'invention permet de répondre au critère de sous-criticité même pour le transport d'hexafluorure d'uranium fortement enrichi, c'est-à-dire présentant un enrichissement supérieur à 5% en masse. De plus, cette conception permet d'utiliser des conteneurs internes 2 conventionnels / normalisés existants du type « cylindre 30B », ou équivalents mentionnés ci-dessus, conservant ainsi leurs capacités de chargement en hexafluorure d'uranium. Egalement, cette conception offre avantageusement des facilités pour le chauffage du conteneur interne étanche 2. En exploitation, et plus particulièrement pour les besoins des opérations de remplissage d'hexafluorure d'uranium, le conteneur interne 2 peut être facilement extrait du conteneur externe 8, pour pouvoir être ensuite plus facilement chauffé, par exemple dans un four prévu à cet effet, sans être sujet à des problèmes d'inertie thermique. Le temps de chauffage et/ou la puissance de chauffe peuvent avantageusement être réduits. Il est noté que le caractère extractible du conteneur interne 2 vis-à-vis du conteneur externe étanche 8, se comprend comme la capacité d'ouvrir la seconde enceinte de confinement 15 de manière non-destructive, c'est-à-dire de manière réversible de façon à pouvoir ensuite la refermer, puis la rouvrir, etc. Cette fonctionnalité est préférentiellement obtenue en utilisant des moyens de fixation réversible entre différentes parties du conteneur externe 8, comme les boulons précités. Bien entendu, diverses modifications peuvent être apportées par l'homme du métier à l'invention qui vient d'être décrite, uniquement à titre d'exemples non limitatifs, et dans la limite de la portée définie par les revendications annexées.

## Revendications

1. Ensemble (1) pour le transport d'hexafluorure d'uranium, **caractérisé en ce qu'**il comprend :
- un conteneur interne étanche (2), définissant une première enceinte de confinement (14) destinée à être chargée d'hexafluorure d'uranium, le conteneur interne étanche (2) présentant une forme générale cylindrique de section circulaire, la première enceinte de confinement (14) étant délimitée par une paroi latérale (16) s'étendant autour d'un axe central longitudinal (6) du conteneur interne, ainsi que par deux parois d'extrémité axiale opposées (18) traversées par l'axe central longitudinal (6), au moins l'une des deux parois d'extrémité axiale opposées (18) du conteneur interne étanche étant équipée d'une vanne (20) de remplissage d'hexafluorure d'uranium ainsi que d'un prolongement axial annulaire (22) de protection de la vanne de remplissage d'hexafluorure d'uranium (20), le prolongement (22) s'étendant axialement au-delà de la vanne de remplissage (20) ;
- un conteneur externe étanche (8) délimitant une seconde enceinte de confinement (15) dans laquelle est logé, de manière extractible, le conteneur interne étanche (2) ; et
- deux capots amortisseurs de choc (19) fixés de manière démontable sur respectivement deux extrémités axiales opposées du conteneur externe étanche (8).

2. Ensemble selon la revendication 1, **caractérisé en ce que** le conteneur externe étanche (8) comporte un étui (56) ainsi qu'un couvercle (58) fixé de manière démontable sur l'étui, ce dernier délimitant une ouverture (60) d'introduction axiale du conteneur interne étanche (2) dans la seconde enceinte de confinement (15).

3. Ensemble selon la revendication 2, **caractérisé en ce que** le conteneur interne (2) est agencé dans le conteneur externe (8) de sorte que la vanne de remplissage (20) du conteneur interne fait face au couvercle (58) du conteneur externe (8).

4. Ensemble selon l'une quelconque des revendications précédentes, **caractérisé en ce qu'**une couche (40) de matériau isolant neutronique, de préférence réalisée dans un matériau comprenant du bore et/ou hydrogéné, est prévue :
- sur une surface latérale externe du conteneur externe étanche (8) ; et/ou
- sur une surface latérale interne du conteneur externe étanche (8) ; et/ou
- lorsque le conteneur externe étanche (8) présente une double paroi latérale, entre les deux parois (8', 8") de la double paroi latérale.

5. Ensemble selon l'une quelconque des revendications précédentes, **caractérisé en ce que** la paroi latérale du conteneur externe étanche (8) est en acier.

6. Ensemble selon l'une quelconque des revendications précédentes, **caractérisé en ce que** les parois latérales du conteneur externe étanche (8) et du conteneur interne étanche (2) sont en acier et présentent une épaisseur cumulée supérieure ou égale à 13 mm.

7. Ensemble selon l'une quelconque des revendications précédentes, **caractérisé en ce que** l'un des deux capots amortisseurs de choc (19) comporte un élément amortisseur de choc (32) en regard axialement de la vanne (20) de remplissage d'hexafluorure d'uranium prévue sur le conteneur interne étanche (2).

8. Ensemble selon l'une quelconque des revendications précédentes, **caractérisé en ce que** chaque capot amortisseur de choc (19) comporte un renfoncement (21) dans lequel est logée l'extrémité axiale associée du conteneur externe étanche (8).

9. Ensemble selon l'une quelconque des revendications précédentes, **caractérisé en ce qu'**il présente une longueur (L2) inférieure ou égale à la longueur d'un conteneur ISO de 20 pieds selon la direction de l'axe central longitudinal (6) du conteneur interne étanche (2), et de préférence une longueur (L2) inférieure ou égale à la longueur d'un conteneur ISO de 15 pieds.

10. Ensemble selon l'une quelconque des revendications précédentes, **caractérisé en ce que** le conteneur interne étanche (2) est conçu pour répondre à la norme ISO 7195 portant sur le transport d'hexafluorure d'uranium.

11. Système (100) comprenant un véhicule (200) de transport d'hexafluorure d'uranium, ainsi qu'au moins un ensemble (1) selon l'une quelconque des revendications précédentes, monté sur une plateforme de chargement (205) de ce véhicule, qui est préférentiellement un véhicule de transport routier, ferroviaire ou maritime.

12. Système selon la revendication 11, **caractérisé en ce que** chaque ensemble (1) est orienté de sorte que l'axe central longitudinal (6) de son conteneur interne étanche (2) soit agencé parallèlement à une direction d'avancement (206) du véhicule de transport.

13. Système selon la revendication 11 ou 12, **caractérisé en ce que** plusieurs ensembles (1) sont montés sur la plateforme de chargement (205) du véhicule, en étant empilés les uns sur les autres, et/ou agencés les uns derrière les autres selon la direction d'avancement (206) du véhicule de transport, et/ou agencés les uns à côté des autres.

## Patentansprüche

1. Baugruppe (1) für den Transport von Uranhexafluorid, **dadurch gekennzeichnet, dass** sie Folgendes umfasst:
- einen dichten Innenbehälter (2), der einen ersten Sicherheitsbehälter (14) definiert, der dazu bestimmt ist, mit Uranhexafluorid beladen zu werden, wobei der dichte Innenbehälter (2) eine allgemein zylindrische Form mit kreisförmigem Abschnitt aufweist, wobei der erste Sicherheitsbehälter (14) durch eine Seitenwand (16), die sich um eine zentrale Längsachse (6) des Innenbehälters erstreckt, sowie durch zwei gegenüberliegende axiale Endwände (18) begrenzt ist, die von der zentralen Längsachse (6) durchquert werden, mindestens eine der beiden gegenüberliegenden axialen Endwände (18) des abgedichteten Innenbehälters mit einem Uranhexafluoridfüllventil (20) sowie mit einer ringförmigen axialen Verlängerung (22) zum Schutz des Uranhexafluoridfüllventils (20) versehen ist, wobei sich die Verlängerung (22) axial über das Füllventil (20) hinaus erstreckt;
- einen dichten Außenbehälter (8), der einen zweiten Sicherheitsbehälter (15) begrenzt, in welchem der dichte Innenbehälter (2) herausnehmbar untergebracht ist; und
- zwei stoßdämpfende Abdeckungen (19), die abnehmbar an jeweils zwei gegenüberliegenden axialen Enden des dichten Außenbehälters (8) befestigt sind.

2. Baugruppe nach Anspruch 1, **dadurch gekennzeichnet, dass** der dichte Außenbehälter (8) eine Hülle (56) sowie einen Deckel (58) umfasst, der abnehmbar an der Hülle befestigt ist, wobei letzterer eine Öffnung {60) zur axialen Einführung des dichten Innenbehälters (2) in den zweiten Sicherheitsbehälter (15) begrenzt.

3. Baugruppe nach Anspruch 2, **dadurch gekennzeichnet, dass** der Innenbehälter (2) in dem Außenbehälter (8) so angeordnet ist, dass das Füllventil (20) des Innenbehälters dem Deckel (58) des Außenbehälters (8) gegenüberliegt.

4. Baugruppe nach einem der vorstehenden Ansprüche, **dadurch gekennzeichnet, dass** eine Schicht (40) aus neutronenisolierendem Material, vorzugsweise aus einem borhaltigen und/oder hydrierten Material, vorgesehen ist:
- auf einer äußeren seitlichen Oberfläche des abgedichteten Außenbehälters (8); und/oder
- auf einer inneren seitlichen Oberfläche des abgedichteten Außenbehälters (8); und/oder
- wenn der dichte Außenbehälter (8) eine doppelte Seitenwand hat, zwischen den beiden Wänden (8', 8") der doppelten Seitenwand.

5. Baugruppe nach einem der vorstehenden Ansprüche, **dadurch gekennzeichnet, dass** die Seitenwand des dichten Außenbehälters (8) aus Stahl besteht.

6. Baugruppe nach einem der vorstehenden Ansprüche, **dadurch gekennzeichnet, dass** die Seitenwände des dichten Außenbehälters (8) und des dichten Innenbehälters (2) aus Stahl bestehen und eine kumulierte Dicke von 13 mm oder mehr aufweisen.

7. Baugruppe nach einem der vorstehenden Ansprüche, **dadurch gekennzeichnet, dass** eine der beiden stoßdämpfenden Abdeckungen (19) ein stoßdämpfendes Element (32) aufweist, das dem Uranhexafluoridfüllventil (20), das an dem dichten Innenbehälter (2) vorgesehen ist, axial gegenüberliegt.

8. Baugruppe nach einem der vorstehenden Ansprüche, **dadurch gekennzeichnet, dass** jede stoßdämpfende Abdeckung (19) eine Vertiefung (21) aufweist, in welcher das zugehörige axiale Ende des abgedichteten Außenbehälters (8) untergebracht ist.

9. Baugruppe nach einem der vorstehenden Ansprüche, **dadurch gekennzeichnet, dass** sie eine Länge (L2) aufweist, die kleiner oder gleich der Länge eines 20-Fuß-ISO-Behälters in Richtung der zentralen Längsachse (6) des abgedichteten Innenbehälters (2) ist, und vorzugsweise eine Länge (L2) aufweist, die kleiner oder gleich der Länge eines 15-Fuß-ISO-Behälters ist.

10. Baugruppe nach einem der vorstehenden Ansprüche, **dadurch gekennzeichnet, dass** der dichte Innenbehälter (2) so ausgelegt ist, dass er die ISO-Norm 7195 für den Transport von Uranhexafluorid erfüllt.

11. System (100) umfassend ein Fahrzeug (200) zum Transport von Uranhexafluorid sowie mindestens eine Baugruppe (1) nach einem der vorstehenden Ansprüche, die auf einer Ladeplattform (205) dieses Fahrzeugs montiert ist, bei dem es sich vorzugsweise um ein Straßen-, Schienen- oder Schiffstransportfahrzeug handelt.

12. System nach Anspruch 11, **dadurch gekennzeichnet, dass** jede Baugruppe (1) so ausgerichtet ist, dass die Längsmittelachse (6) ihres abgedichteten Innenbehälters (2) parallel zu einer Fahrtrichtung (206) des Transportfahrzeugs angeordnet ist.

13. System nach Anspruch 11 oder 12, **dadurch gekennzeichnet, dass** mehrere Baugruppen (1) auf der Ladefläche (205) des Fahrzeugs übereinander gestapelt und/oder in Fahrtrichtung (206) des Transportfahrzeugs hintereinander angeordnet und/oder nebeneinander angeordnet sind.

## Claims

1. Assembly (1) for transporting uranium hexafluoride, **characterised in that** it comprises:
- a sealed inner container (2), defining a first containment shell (14) intended to be loaded with uranium hexafluoride, the sealed inner container (2) having a general cylindrical shape of circular cross-section, the first containment shell (14) being delimited by a lateral wall (16) extending about a longitudinal central axis (6) of the inner container, as well as by two opposite axial end walls (18) crossed by the longitudinal central axis (6), at least one of the two opposite axial end walls (18) of the sealed inner container being equipped with a uranium hexafluoride filling valve (20) as well as with a protective annular axial extension (22) of the uranium hexafluoride filling valve (20), the extension (22) extending axially beyond the filling valve (20);
- a sealed outer container (8) delimiting a second containment shell (15) wherein the sealed inner container (2) is housed in an extractable manner; and
- two shock absorber caps (19) removably fastened on respectively two opposite axial ends of the sealed outer container (8).

2. Assembly according to claim 1, **characterised in that** the sealed outer container (8) includes a case (56) as well as a cover (58) removably fastened onto the case, the latter delimiting an axial introduction opening (60) of the sealed inner container (2) in the second containment shell (15).

3. Assembly according to claim 2, **characterised in that** the inner container (2) is arranged in the outer container (8) such that the filling valve (20) of the inner container faces the cover (58) of the outer container (8).

4. Assembly according to any one of the preceding claims, **characterised in that** a layer (40) of neutron insulating material, preferably made of a material comprising boron and/or which is hydrogenated, is provided:
- on an outer lateral surface of the sealed outer container (8); and/or
- on an inner lateral surface of the sealed outer container (8); and/or
- when the sealed outer container (8) has a lateral double wall, between the two walls (8', 8") of the lateral double wall.

5. Assembly according to any one of the preceding claims, **characterised in that** the lateral wall of the sealed outer container (8) is made of steel.

6. Assembly according to any one of the preceding claims, **characterised in that** the lateral walls of the sealed outer container (8) and the sealed inner container (2) are made of steel and have a cumulative thickness greater than or equal to 13 mm.

7. Assembly according to any of the preceding claims, **characterised in that** one of the two shock absorber caps (19) includes a shock absorber element (32) axially facing the uranium hexafluoride filling valve (20) provided on the sealed inner container (2).

8. Assembly according to any one of the preceding claims, **characterised in that** each shock absorber cap (19) includes a recess (21) wherein the associated axial end of the sealed outer container (8) is housed.

9. Assembly according to any one of the preceding claims, **characterised in that** it has a length (L2) less than or equal to the length of a 20-foot ISO container along the direction of the longitudinal central axis (6) of the sealed inner container (2), and preferably a length (L2) less than or equal to the length of a 15-foot ISO container.

10. Assembly according to any one of the preceding claims, **characterised in that** the sealed inner container (2) is designed to meet the standard ISO 7195 relating to the transport of uranium hexafluoride.

11. System (100) comprising a vehicle (200) for transporting uranium hexafluoride, as well as at least one assembly (1) according to any one of the preceding claims, mounted on a loading platform (205) of this vehicle, which is preferably a road, rail or sea transport vehicle.

12. System according to claim 11, **characterised in that** each assembly (1) is oriented so that the longitudinal central axis (6) of its sealed inner container (2) is arranged parallel to a direction of travel (206) of the transport vehicle.

13. System according to claim 11 or 12, **characterised in that** several assemblies (1) are mounted on the loading platform (205) of the vehicle, by being stacked on top of each other, and/or arranged one behind another according to the direction of travel (206) of the transport vehicle, and/or arranged side by side.
